## Europäisches Patentamt
## European Patent Office
## Office européen des brevets

(11) Publication number: **0 107 205**
**B1**

(12) **EUROPEAN PATENT SPECIFICATION**

(45) Date of publication of patent specification: **13.06.90**

(51) Int. Cl.⁵: **H 04 N 9/455**

(21) Application number: **83110642.2**

(22) Date of filing: **25.10.83**

(54) Gate pulse generating circuit and color television receiver.

(30) Priority: **25.10.82 JP 186182/82**

(43) Date of publication of application:
**02.05.84 Bulletin 84/18**

(45) Publication of the grant of the patent:
**13.06.90 Bulletin 90/24**

(84) Designated Contracting States:
**DE FR GB**

(56) References cited:
**FR-A-2 376 581**
**US-A-3 544 708**
**US-A-4 149 180**
**US-A-4 228 456**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Miyasako, Yoji**
**626 Toriyama-cho Kohoku-ku**
**Yokohama-shi (JP)**

(74) Representative: **Lehn, Werner, Dipl.-Ing. et al**
**Hoffmann, Eitle & Partner Patentanwälte**
**Arabellastrasse 4**
**D-8000 München 81 (DE)**

Courier Press, Leamington Spa, England.

## Description

The present invention relates to a gate pulse generating circuit for, for example, a color television receiver. US-A-3 544 708 and FR-A-2 376 581 both disclose television receivers comprising gate pulse generating circuit which is responsive to a horizontal synchronizing pulse and a horizontal flyback pulse.

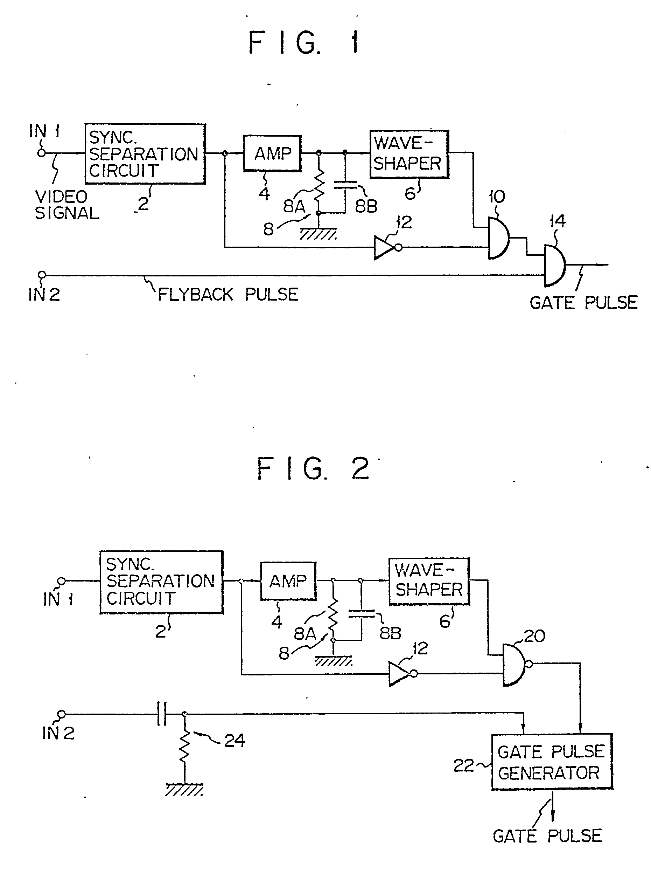

Furthermore, in color television receivers or the like, there has been known a gate pulse generating circuit for generating gate pulses used for deriving a burst signal from a video signal, as shown in Fig. 1. This gate pulse generating circuit comprises a sync separation circuit 2 for separating a sync signal from a video signal supplied to a first input terminal IN1, a buffer amplifier circuit 4 for amplifying the sync signal derived from the sync separation circuit 2, and a waveshaper 6 for receiving the output signal of the buffer amplifier circuit 4 via a delay circuit 8. The delay circuit 8 includes a resistor 8A and a capacitor 8B connected in parallel between the output terminal of the buffer amplifier circuit 4 and ground. The sync signal from the sync separation circuit 2 is coupled with one input terminal of an AND circuit 10 connected at the other input terminal to the output terminal of the waveshaper 6 through an inverter 12. The output terminal of the AND circuit 10 is coupled with one input terminal of an AND circuit 14 whose other input terminal is connected to receive a flyback pulse supplied to a second input terminal IN2.

In this gate pulse generating circuit, a sync signal contained in the video signal supplied to the first input terminal IN1 is synchronized with a flyback pulse supplied to the second input terminal from a flyback transformer (not shown) via a resistive circuit. In the gate pulse generating circuit, when the sync signal is produced from the sync separation circuit 2, the AND circuit 10 produces a burst gate pulse delayed behind the sync signal. The burst gate pulse is produced as a gate pulse through the AND circuit 14 when the flyback pulse is supplied. However, when the sync separation circuit 2 produces no sync signal, the AND circuit 14 is disabled, which produces no gate pulse. For example, when the video signal supplied to the first input terminal IN1 is small, the sync separation circuit 2 may not properly derive the sync signal from the video signal. In this case, the AND circuit 14 produces no gate pulse, so that no DC restoration is performed, which is necessary for reproducing the contrast of a picture with a good fidelity, and no color synchronization operation for the color signal detection is also performed. Therefore, the output DC current greatly fluctuates or the color synchronization can not be attained, making the reproduced picture instable.

Accordingly, an object of the present invention is to provide a gate pulse generating circuit capable of generating gate pulses reliably.

According to the invention, there is provided a gate pulse generating circuit having a first and a second input terminal, a sync separation means connected to the first input terminal to receive a video signal for deriving a sync signal therefrom, delay means for delaying the sync signal derived from said sync separation means, burst gate pulse generating means for generating a burst gate pulse in accordance with the output signals from said sync separation means and said delay means, and gate pulse generating means for generating a gate pulse in accordance with the burst gate pulse from said burst gate pulse generating means and a flyback pulse, characterized in that said gate pulse generating means further includes capacitive coupling means for capacitively coupling said second input terminal for receiving the flyback pulse with said gate pulse generating means, and that said gate pulse generating means is arranged to respond to the burst gate pulse from said burst gate pulse generating means to generate a gate pulse, and when the burst gate pulse is not produced from said burst gate pulse generating means, said gate pulse generating means is arranged to respond to the flyback pulse supplied through said capacitive coupling means to generate a gate pulse synchronised with said flyback pulse.

This invention can be more fully understood from the following detailed description when taken in conjunction with the accompanying drawings, in which:

Fig. 1 shows a conventional gate pulse generating circuit;

Fig. 2 shows a gate pulse generating circuit according to an embodiment of the present invention;

Fig. 3 is a detail circuit diagram of the gate pulse generating circuit shown in Fig. 2;

Figs. 4A to 4H show signal waveforms illustrating the operation of the gate pulse generating circuit shown in Fig. 3;     ·

Figs. 5A to 5E show signal waveforms illustrating the operation of the gate pulse generator shown in Fig. 3; and

Figs. 6 and 7 show gate pulse generators which may be used instead of the gate pulse generator shown in Fig. 3.

Fig. 2 is a circuit diagram of a gate pulse generating circuit according to an embodiment of the present invention. This circuit is substantially the same as that of the Fig. 1 except that a NAND gate 20 is used in place of the AND circuit 10, a gate pulse generator 22 is used instead of the AND gate 14, and a capacitive coupling circuit 24 is additionally used for capacitively coupling the second input terminal IN2 with the gate pulse generator 22.

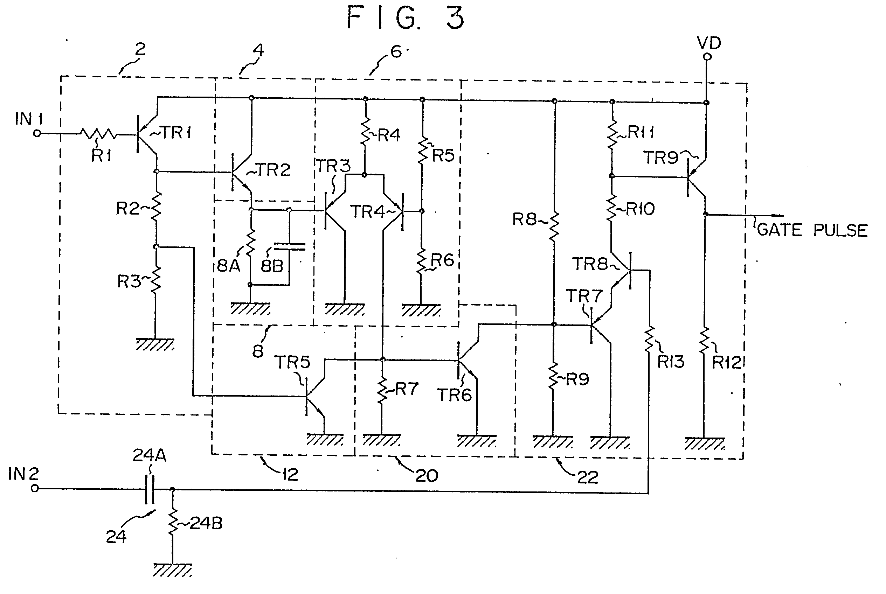

Fig. 3 is a detail circuit diagram of the gate pulse generating circuit shown in Fig. 2. The sync separation circuit 2 is composed of a pnp transistor TR1 having a base connected to the first input terminal IN1 through a resistor R1, an emitter connected to a power source terminal VD, and a collector grounded through a series of resistors R2 and R3. The buffer amplifier circuit 4 is composed of an npn transistor TR2 having a collector connected to the power source terminal VD, and a base connected to the collector of the pnp transistor TR1. The emitter of the npn transistor TR2 is grounded through a parallel circuit of the resistor 8A and the capacitor 8B in the delay circuit 8. The waveshaper 6 has a differential amplifier composed of pnp transistors TR3 and TR4 whose emitters are coupled with the power source terminal VD through a resistor R4. The base of the transistor TR3 is connected to the emitter of the npn transistor TR2, and its collector is grounded. The base of the transistor TR4 is connected to a junction between resistors R5 and R6 connected in series between the power source terminal VD and ground. The inverter 12 is composed of an npn transistor TR5 having a base connected to a junction between the resistors R2 and R3 and an emitter grounded. The NAND circuit 20 is composed of a resistor R7 which is connected at one end to the collectors of the transistors TR4 and TR5 and grounded at the other end, and an npn transistor TR6 having a base grounded via the resistor R7 and an emitter directly grounded. In the gate pulse generator 22, resistors R8 and R9 are connected in series between the power source terminal VD and ground. A pnp transistor TR7 is connected at the base to the collector of the transistor TR6 and to a junction between the resistors R8 and R9, and grounded at the collector. An npn transistor TR8 is connected at the emitter to the emitter of the transistor TR7, and at the collector to the power source terminal VD through serially connected resistors R10 and R11. A pnp transistor TR9 is connected at the base to a junction between the resistors R10 and R11, at the emitter to the power source terminal VD, and grounded at the collector via a resistor R12. The base of the transistor TR8 is connected to one end of a resistor R13 whose other end is connected through a capacitive coupling circuit 24 to the second input terminal IN2. The capacitive coupling circuit 24 is composed of a capacitor 24A coupled between the resistor R13 and the second input terminal IN2, and a resistor 24B coupled between the resistor R13 and ground. The output gate pulse of the gate pulse generating circuit is derived from the collector of the transistor TR9.

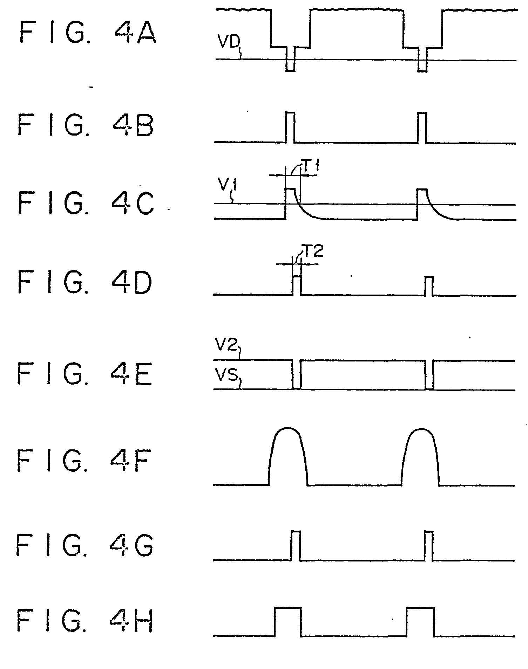

The operation of the gate pulse generating circuit shown in Fig. 3 will be described referring to Figs. 4A to 4H.

A video signal as shown in Fig. 4A is applied to the first input terminal IN1. When the video signal is higher in level than the power source voltage VD, the pnp transistor TR1 is made nonconductive, so that the collector of the transistor TR1 is set at the ground potential level VS, as shown in Fig. 4B. When the video signal is lower in level than the power source voltage VD, the transistor TR1 is made conductive, and the collector potential of the transistor TR1 becomes equal to the voltage level VD. In this way, the sync separation circuit 2 responds to the input video signal shown in Fig. 4A to generate a sync signal shown in Fig. 4B. The buffer amplifier circuit 4 responds to the synchronization signal from the sync separation circuit 2 to generate a pulse signal. During a period that the pulse signal from the buffer amplifier circuit 4 is at a high level, a high level voltage VH is applied to the base of the transistor TR3, as shown in Fig. 4C. At this time, since a predetermined voltage V1 (= R6 × VD/R5 + R6) has been applied to the base of the transistor TR4, the transistor TR3 is made nonconductive, while the transistor TR4 is made conductive. Then, when the sync signal shown in Fig. 4B becomes low, the base potential of the transistor TR3 gradually decreases from the high level voltage VH to the ground potential level VS at a rate determined by the time constant of the resistor 8A and the capacitor 8B. When the base potential of the transistor TR3 falls below the predetermined voltage V1, the transistor TR3 is made conductive, while the transistor TR4 is made nonconductive. In this way, the transistor TR4 is kept conductive for a period T1 ranging from an instant that the base potential of the transistor TR3 becomes high in level till it becomes lower than the predetermined voltage V1. The base of the transistor TR5 is supplied with a voltage which is obtained by voltage-dividing the sync signal shown in Fig. 4B by a dividing ratio determined by the resistors R2 and R3. When this sync signal is high in level, the base potential of the transistor TR5 is high, and the transistor TR5 is conductive. Accordingly, during a period that the sync signal shown in Fig. 4B is kept high, the transistors TR4 and TR5 are conductive and the base potential of the transistor TR6 is kept low, as shown in Fig. 4D. During the period T2 from an instant that the sync signal becomes low in level till the base potential of the transistor TR3 becomes lower than the predetermined voltage V1, the transistor TR4 is conductive, while the transistor TR5 is nonconductive. Under this condition, a current I flows through the resistor R4, the transistor TR4 and the resistor R7. Then, a voltage of I × R7 is applied to the base of the transistor TR6 over the period T2, as shown in Fig. 4D, thereby to render the transistor TR6 conductive.

The period T2 during which the transistor TR6 is kept conductive is adjustable by changing the predetermined voltage V1 applied to the base of the transistor TR4 and the time constant of the delay circuit 8. This implies that if the period T2 is set so that the color burst signal in the video signal appears during this period T2, it is possible to use the output signal from the NAND circuit 16 as a burst gate pulse.

In response to the voltage shown in Fig. 4D, the transistor TR6 is rendered conductive. At this time, the base potential of the transistor TR7 decreases from the predetermined voltage V2 (= R9 VD/R8 + R9) to the ground potential VS, as shown in Fig. 4E. Then, it is kept at the ground potential over the period T2.

The second input terminal IN2 is supplied with the flyback pulse shown in Fig. 4F which is synchronized with the sync signal shown in Fig 4B by an automatic frequency control circuit (not shown). Then, the flyback pulse is supplied to the base of the transistor TR8 through the capacitive coupling circuit 24 and the resistor R13. When the voltage between the bases of the transistors TR8 and TR7 rises to be two times or more the built-in potential VBE, these transistors TR8 and TR7 are made conductive. The conducting period of the transistors TR8 and TR7 is determined by the burst gate pulse shown in Fig. 3, when the sync signal shown in Fig. 4B is produced. When the sync signal shown in Fig. 4B is not obtained, the conducting period is determined by the flyback pulse.

When the transistors TR8 and TR7 are made conductive, the predetermined voltage V3 (= R10 VD/R10 + R11) is applied to the base of the transistor TR9, so that the transistor TR9 is made conductive and its collector voltage becomes approximately equal to the power source voltage VD. Under this condition, when the sync signal of Fig. 4B is produced from the sync separation circuit 2, the gate pulse generator 22 produces a gate pulse synchronized with the burst gate pulse shown in Fig. 4E, as shown in Fig. 4G. When the sync signal shown in Fig. 4B is not obtained, a gate pulse shown in Fig. 4H synchronized with the flyback pulse of Fig. 4F is produced.

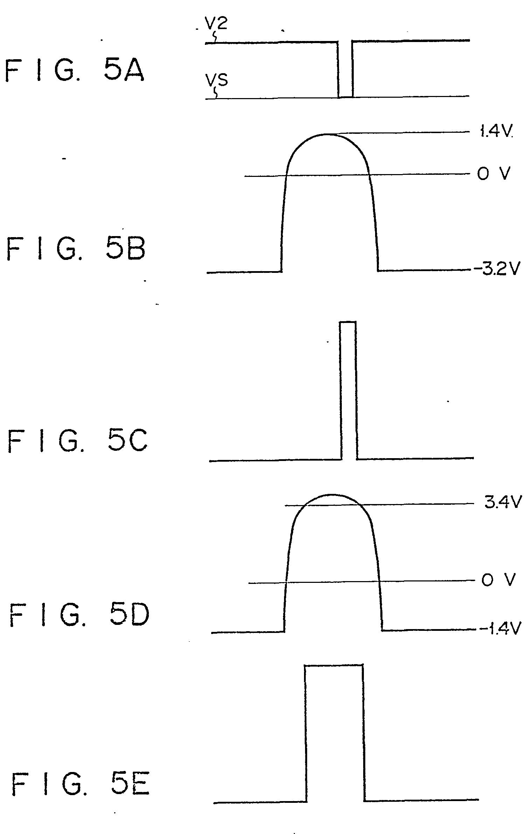

The operation of the gate pulse generator 22 will be described referring to Figs. 5A to 5E. In this generator 22, the predetermined voltage V2 is set at 2 V and the amplitude of the flyback pulse is set at 5 V. Assume now that a sync signal is derived from the sync separation circuit 2 and the burst gate pulse shown in Fig. 5A is produced from the NAND gate 20. When the output pulse at the ground potential level VS is produced from the NAND circuit 20, and the flyback pulse shown in Fig. 5B is supplied to cause a voltage higher than 2 VBE, for example, $2 \times 0.7$ V to be applied between the bases of the transistors TR8 and TR7, then, these transistors TR8 and TR7 are made conductive. Then, as described above, the gate pulse generator 22 generates the gate pulse as shown in Fig. 5C. In this case, the base potential of the transistor TR7 is kept at the ground potential level VS, and the base potential of the transistor TR8, at 1.4 V. When the burst gate pulse from the NAND circuit 20 reaches the ground potential level, the flyback pulse is at about the peak level. Further, the second input terminal IN2 is coupled with the base of the transistor TR8 through the capacitor 24A. Accordingly, the potential at the second input terminal IN2 is decreased to approximately − 3.6 V. Afterwards, this potential gradually changes toward 0 V level. In this case, if the time constant determined by the capacitor 24A and the resistor 24B is set to an appropriate value larger than the period of the sync signal, the potential at the second input terminal IN2 may be changed from − 3.6 V to − 3.2 V, for example, during each period of the flyback pulse.

In case where the potential at the input terminal IN2 is kept in a range between − 3.6 V and − 3.2 V, if the flyback pulse reaches its peak under a condition that the transistor TR6 is nonconductive and the base potential of the transistor TR7 is set at 2 V, a maximum of 1.4 V will be applied across the base to base path of the transistors TR8 and TR7. Accordingly, these transistors TR8 and TR7 are kept nonconductive. Thereafter, when the transistor TR6 is made conductive and the base potential of the transistor TR7 is decreased to the ground potential level VS or 0 V, a voltage of 1.4 V is applied between the bases of the transistors TR8 and TR7, thereby to render the transistors TR8 and TR7 conductive. The transistors TR8 and TR7 are made nonconductive when the base potential of the transistor TR7 becomes 2 V. In this way, when the sync signal is periodically produced from the sync separation circuit 2, the gate pulse generator 22 produces the gate pulse (Fig. 5C) in synchronism with the burst gate pulse from the NAND circuit 20 shown in Fig. 5A.

When a sync signal is not generated from the sync separation circuit 2, the transistor TR6 is kept nonconductive and the base potential of the transistor TR7 is kept at 2 V. Accordingly, when the voltage between the bases of the transistors TR8 and TR7 becomes higher than 1.4 V according to the flyback pulse applied to the transistor TR8 through the capacitive coupling circuit 24 and the resistor R13, that is, the base potential of the transistor TR8 becomes higher than 3.4 V, then the transistors TR8 and TR7 are made conductive. Upon turning on of these transistors, the base potential of the transistor TR8 is kept at 3.4 V and the potential at the second input terminal IN2 is decreased to approximately − 1.6 V. Then, this potential gradually changes toward 0 V. In this case, if the time constant of the capacitor 24A and the resistor 24B is selected to be an appropriate value larger than the period of the flyback pulse, the potential at the second input terminal IN2 may be changed from − 1.6 V to − 1.4 V, for example, during each period of the flyback pulse. When the level of this flyback pulse is at 3.4 V, the transistors TR8 and TR7 are made conductive. When the level of the flyback pulse is lower than 3.4 V, these transistors are made nonconductive again. In this way, when no sync signal is produced from the sync separation circuit 2, the gate pulse generator 22 produces the gate pulse shown in Fig. 5E, which is synchronized with the flyback pulse shown in Fig. 5D. The pulse width of the gate pulse obtained in this case is controllable according to the time constant determined by the capacitor 24A and the resistor 24B.

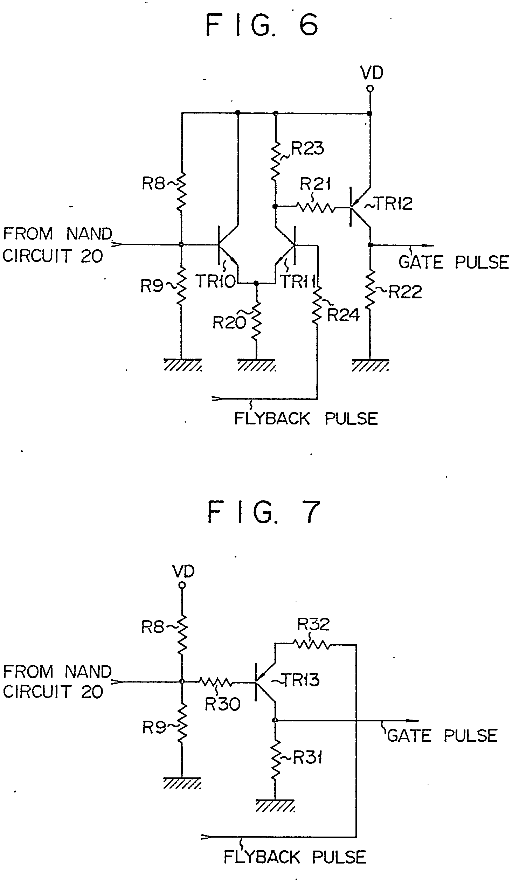

Fig. 6 shows a gate pulse generator which may be used in place of the gate pulse generator 22 shown in Fig. 3. The gate pulse generator of Fig. 6 is comprised of npn transistors TR10 and TR11 whose emitters are grounded through a resistor R20, and a pnp transistor TR12 whose emitter is connected to the power source terminal VD, and the collector is grounded via a resistor R22. The collector of the transistor TR10 is coupled with the power source terminal VD and the base thereof is connected to the output terminal of the NAND circuit 20 (Fig. 3) and to a junction between resistors R8 and R9 connected in series between the power source terminal VD and ground. The collector of the transistor TR11 is connected to the power source terminal VD through a resistor R23 and the base thereof is coupled with the capacitive coupling circuit 24 (Fig. 4) via a resistor R24.

When a sync signal is produced from the sync separation circuit 2, the NAND gate 20 produces a voltage at a low level VS shown in Fig. 4 which in turn is applied to the base of the transistor TR10. Then, the transistor TR11 is made conductive, so that the base potential of the transistor TR11 is kept at a potential equal to the sum of the voltage drop V20 across the resistor R20 and the base to emitter voltage VBE of the transistor TR11. In this case, as described above, the potential at the second input terminal IN2 is set at the potential of — (5V — V20 — VBE). The gate pulse synchronized with the burst gate pulse produced every time the sync signal is produced, is derived from the collector of the transistor TR12.

When the sync signal is not produced, the base potential of the transistor TR10 is set at 2 V, for example, and when the base potential of the transistor TR11 is at 2 V or more by the flyback pulse, the transistor TR11 is made conductive. Also in this case, the potential at the second input terminal IN2 is set at a predetermined level, and gradually rises according to the time constant of the capacitor 24A and the resistor 24 till the flyback pulse is supplied. When the sync signal is not generated, the gate pulse synchronized with the flyback pulse is derived from the collector of the transistor TR12.

Fig. 7 shows a gate pulse generator which is replaceable with the gate pulse generator 22 shown in Fig. 3. The gate pulse generating circuit is composed of resistors R8 and R9 connected between the power source terminal VD and ground, and a pnp transistor TR13 which is connected at the base to the output terminal of the NAND gate 20 via a resistor R30 and to a junction between the resistors R8 and R9, and grounded at the collector via a resistor R31. The emitter of the transistor TR13 is coupled with the capacitive coupling circuit (Fig. 3) via a resistor R32.

When the sync signal is produced, the base potential of the transistor TR13 is temporarily set to the ground potential level by the low level signal from the NAND gate 20. Under this condition, when the level of the flyback pulse rises and becomes higher than the emitter to base voltage VBE of the transistor TR13, the transistor TR13 is made conductive. At this time, the emitter of the transistor TR13 is kept at the predetermined voltage VBE, so that the potential at the second input terminal IN2 is set at the potential level — (5 — VBE) = — 4.3 V. In the subsequent operation cycle, only when the transistor TR13 is supplied with the flyback pulse, and the base thereof is set to the ground potential level, the transistor TR13 is made conductive. Then, a gate pulse synchronized with the burst gate pulse shown in Fig. 4E is taken out from the collector of the transistor TR13.

When the sync signal is not generated, the base potential of the transistor TR13 is kept at 2V. Therefore, when the flyback pulse potential is 2.7 V or more, the transistor TR13 is made conductive. In this case, since the emitter potential of the transistor TR13 is kept at 2.7 V, the potential at the second input terminal IN2 is set at — 2.3 V. The potential at the second input terminal IN2 slightly changes in the positive direction till the next flyback pulse is supplied. Subsequently, when the emitter potential of the transistor TR13 exceeds 2.7 V, the gate pulse is derived from the collector of the transistor TR13.

As has been described, when a sync signal is appropriately extracted from a video signal and a burst gate pulse is generated, a gate pulse is generated in synchronism with the burst gate pulse. On the other hand, when the sync signal is not derived from the video signal and no burst gate pulse is generated, a gate pulse synchronized with the flyback pulse is generated. Therefore, even when the sync separating operation is not properly performed, the gate pulse generating circuit can produce the gate pulse. With this arrangement, when the video input signal level drops or no video signal is supplied, the gate pulse is produced, and the DC restoration is ensured, thereby to provide a stable reproduced picture.

## Claims

1. A gate pulse generating circuit having a first and a second input terminal (IN1, IN2), a sync separation means (2) connected to the first input terminal to receive a video signal for deriving a sync signal therefrom, delay means (8) for delaying the sync signal derived from said sync separation means (2), burst gate pulse generating means (20) for generating a burst gate pulse in accordance with the output signals from said sync separation means (2) and said delay means (8), and gate pulse generating means (22) for generating a gate pulse in accordance with the burst gate pulse from said burst gate pulse generating means (20) and a flyback pulse, characterized in that said gate pulse generating means (22) further includes capacitive coupling means (24) for capacitively coupling said second input terminal (IN2) for receiving the flyback pulse with said gate pulse generating means (22), and that said gate pulse generating means (22) is arranged to respond to the burst gate pulse from said burst gate pulse generating means (20) to generate a gate pulse, and when the burst gate pulse is not produced from said burst gate pulse generating means (20), said gate pulse generating means (22) is arranged to respond to the flyback pulse supplied through said capacitive coupling means (24) to generate a gate pulse synchronised with said flyback pulse.

2. A gate pulse generating circuit according to claim 1, characterized in that said capacitive coupling means (24) includes capacitive means (24A) connected at one end to said second input terminal (IN2) and at the other end to said gate pulse generating means (22), and resistive means (24B) connected between the other end of said capacitive means (24A) and a reference power source terminal.

3. A gate pulse generating circuit according to claim 1 or 2, characterized in that said gate pulse generating means (22) includes voltage generating means (R8 and R9) for generating one of first and second voltages in response to the output signal from said burst gate pulse generating means (20); switching means (TR7 to TR9; TR10 to TR12; TR13) whose switching state is controlled according to the output voltage from said voltage generating means (R8 and R9) and a flyback pulse supplied through said capacitive coupling means (24), and load resistive means (R12, R22, R31) connected in series to said switching means (TR7 to TR9; TR10 to TR12; TR13).

4. A gate pulse generating circuit according to claim 3, characterised in that said switching means (TR7 to TR9; TR10 to TR12; TR13) includes a first transistor (TR7) whose base is coupled with the output terminal of said voltage generating means (R8 and R9), and a second transistor (TR8) whose current path is connected in series with the current path of said first transistor (TR7), the base of the second transistor (TR8) being coupled with said capacitive coupling means (24).

5. A gate pulse generating circuit according to claim 3, characterised in that said switching means includes a transistor differential amplifier circuit (TR10, TR11, R20 and R23) connected to receive at first and second input terminals the output voltage from said voltage generating means (R8 and R9) and the flyback pulse supplied through said capacitive coupling means (24), and a transistor (TR12) having a current path connected in series with said load resistive means (R22) and a base connected to the output terminal of said differential amplifier circuit (TR10, TR11, R20 and R23).

6. A gate pulse generating circuit according to claim 3, characterized in that said switching means (TR7 to TR9; TR10 to TR12; TR13) is comprised of a transistor whose base is connected to the output terminal of said voltage generating means (R8, R9) and whose current path is connected between said load resistive means (R31) and said capacitive coupling means (24).

7. A color television receiver characterised by a gate pulse generating circuit according to any one of the preceding claims.

**Patentansprüche**

1. Gateimpuls-Erzeugungsschaltung mit einem ersten und einem zweiten Eingangsanschluß (IN1, IN2), Synchronisationstrennmitteln (2), die mit dem ersten Eingangsanschluß verbunden sind, um ein Videosignal zum Ableiten eines Synchronisationssignals von diesem zu empfangen, Verzögerungsmitteln (8) zum Verzögern des von den Synchronisationstrennmitteln (2) abgeleiteten Synchronisationssignals, Gateimpulsbündelerzeugungsmitteln (20) zum Erzeugen eines Gateimpulsbündels entsprechend den Ausgangssignalen von den Synchronisationstrennmitteln und den Verzögerungsmitteln (8) und Gateimpuls-Erzeugungsmitteln (22) zum Erzeugen eines Gateimpulses entsprechend dem Gateimpulsbündel von den Gateimpulsbündelerzeugungsmitteln (20) und einem Rücklaufimpuls, dadurch gekennzeichnet, daß die Gateimpuls-Erzeugungsmittel (22) weiter kapazitive Kopplungsmittel (24) zum kapazitiven Koppeln des zweiten Eingangsanschlusses (IN2) zum Empfangen des Rücklaufimpulses mit den Gateimpuls-Erzeugungsmitteln (22) einschließt und daß die Gateimpuls-Erzeugungsmittel (22) ausgebildet sind, um auf das Gateimpulsbündel von den Gateimpulsbündelerzeugungsmitteln (20) anzusprechen, um einen Gateimpuls zu erzeugen, und wenn das Gateimpulsbündel von den Gateimpulsbündelerzeugungsmitteln (20) nicht erzeugt wird, die Gateimpuls-Erzeugungsmittel (22) ausgebildet sind, um auf den Rücklaufimpuls, der durch die kapazitiven Kopplungsmittel (24) geliefert wird, anzusprechen, um einen mit dem Rücklaufimpuls synchronisierten Gateimpuls zu erzeugen.

2. Gateimpuls-Erzeugungsschaltung nach Anspruch 1, dadurch gekennzeichnet, daß die kapazitive Kupplungsmittel (24) an einem Ende mit dem zweiten Eingangsanschluß (IN2) und an dem anderen Ende mit den Gateimpuls-Erzeugungsmitteln (22) verbundene kapazitive Mittel (24A) und zwischen das andere Ende der kapazitiven Mittel (24A) und einen Bezugsleistungsquelleanschluß geschaltete Widerstandsmittel (24B) einschließen.

3. Gateimpuls-Erzeugungsschaltung nach Anspruch 1 oder 2, dadurch gekennzeichnet, daß die Gateimpuls-Erzeugungsmittel (22) Spannungserzeugungsmittel (R8 und R9) zum Erzeugen einer von ersten und zweiten Spannungen im Ansprechen auf das Ausgangssignal von den Gateimpulsbündel-Erzeugungsmitteln (20); Schaltmittel (TR7 bis TR9; TR10 bis TR12; TR13), deren Schaltzustand entsprechend der Ausgangsspannung von den Spannungserzeugungsmitteln (R8 und R9) und einem durch die kapazitiven Kopplungsmittel (24) gelieferten Rücklaufimpuls gesteuert wird, und in Reihe mit den Schaltmitteln (TR7 bis TR9; TR10 bis TR12; TR13) geschaltete Lastwiderstandsmittel (R12, R22, R31) einschließen.

4. Gateimpuls-Erzeugungsschaltung nach Anspruch 3, dadurch gekennzeichnet, daß die Schaltmittel (TR7 und TR9; TR10 bis TR12; TR13) einen ersten Transistor (TR7), dessen Basis mit dem Ausgangsanschluß der Spannungserzeugungsmittel (R8 und R9) gekoppelt ist, und einen zweiten Transistor TR8), dessen Strompfad in Reihe mit dem Strompfad des ersten Transistors (TR7) geschaltet ist, einschließen, wobei die Basis des zweiten Transistors (TR8) mit den kapazitiven Kopplungsmitteln (24) gekoppelt ist.

5. Gateimpuls-Erzeugungsschaltung nach Anspruch 3, dadurch gekennzeichnet, daß die Schaltmittel eine zum Empfangen an ersten und zweiten Eingangsanschlüssen der Ausgangsspannung von den Spannungserzeugungsmitteln (R8 und R9) und des durch die kapazitiven Kopplungsmittel (24) gelieferten Rücklaufimpulses verbundene Transistordifferenzverstärkerschaltung und einen Transistor (TR12) einschließen, der einen in Reihe mit den Lastwiderstandsmitteln (R22) geschalteten Strompfad und eine mit dem Ausgangsanschluß der Differenzverstärkerschaltung (TR10, TR12, R20 und R23) verbundene Basis aufweist.

6. Gateimpuls-Erzeugungsschaltung nach Anspruch 3, dadurch gekennzeichnet, daß die Schaltmittel (TR7 bis TR9; TR10 bis TR12; TR13) aus einem Transistor bestehen, dessen Basis mit dem Ausgangsanschluß der Spannungserzeugungsmittel (R8, R9) verbunden und dessen Strompfad zwischen die Lastwiderstandsmittel (R31) und die kapazitiven Kopplungsmittel (24) geschaltet ist.

7. Farbfernsehempfänger, gekennzeichnet durch eine Gateimpuls-Erzeugungsschaltung nach einem der vorhergehenden Ansprüche.

**Revendications**

1. Circuit générateur d'impulsions de commande possédant une première et une deuxième borne d'entrée (IN1, IN2), un moyen (2) de séparation du signal de synchronisation, qui est connecté à la première borne d'entrée de façon à recevoir un signal vidéo et à en extraire un signal de synchronisation, un moyen retardateur (8) servant à retarder le signal de synchronisation produit par ledit moyen de séparation de signal de synchronisation (2), un moyen (20) générateur d'impulsions de commande de salve de couleur servant à produire une impulsion de commande de salve de couleur en fonction des signaux de sortie dudit moyen de séparation de signal de synchronisation (2) et dudit moyen retardateur (8), et un moyen (22) générateur d'impulsions de commande servant à produire une impulsion de commande en fonction de l'impulsion de commande de salve de couleur venant dudit moyen générateur d'impulsions de commande de salve de couleur (20) et d'une impulsion de retour de balayage, caractérisé en ce que ledit moyen (22) générateur d'impulsions de commande comporte en outre un moyen de couplage capacitif (24) servant à coupler de manière capacitive la deuxième borne d'entrée (IN2), qui reçoit l'impulsion de retour de balayage, avec ledit moyen générateur d'impulsions de commande (22), et en ce que ledit moyen (22) générateur d'impulsions de commande est conçu de façon à répondre à l'impulsion de commande de salve de couleur venant dudit moyen générateur d'impulsions de commande de salve de couleur (20) en produisant une impulsion de commande, et, lorsque l'impulsion de commande de salve de couleur n'est pas produite par ledit moyen générateur d'impulsions de commande de salve de couleur (20), ledit moyen (22) générateur d'impulsions de commande est conçu pour répondre à l'impulsion de retour de balayage fournie via ledit moyen de couplage capacitif (24) en produisant une impulsion de commande synchronisée avec ladite impulsion de retour de balayage.

2. Circuit générateur d'impulsions de commande selon la revendication 1, caractérisé en ce que ledit moyen de couplage capacitif (24) comporte un moyen capacitif (24A) connecté par une extrémité à ladite deuxième borne d'entrée (IN2) et, par son autre extrémité, audit moyen générateur d'impulsions de commande (22), et un moyen résistif (24B) connecté entre l'autre extrémité dudit moyen capacitif (24A) et une borne de source d'alimentation électrique de référence.

3. Circuit générateur d'impulsions de commande selon la revendication 1 ou 2, caractérisé en ce que ledit moyen (22) générateur d'impulsions de commande comporte un moyen générateur de tension (R8 et R9) servant à produire une première ou une deuxième tension en réponse au signal de sortie dudit moyen générateur d'impulsions de commande de salve de couleur (20); un moyen de commutation (TR7 à TR9; TR10 à TR12; TR13) dont l'état de commutation est commandé en fonction de la tension de sortie dudit moyen générateur de tension (R8 et R9) et d'une impulsion de retour de balayage fournie via ledit moyen de couplage capacitif (24); et un moyen résistif de charge (R12, R22, R31) connecté en série audit moyen de commutation (TR7 à TR9; TR10 à TR12; TR13).

4. Circuit générateur d'impulsions de commande selon la revendication 3, caractérisé en ce que ledit moyen de commutation (TR7 à TR9; TR10 à TR12; TR13) comporte un premier transistor (TR7) dont la base est couplée avec la borne de sortie dudit moyen générateur de tension (R8 et R9), et un deuxième transistor (TR8) dont le trajet de courant est connecté en série avec le trajet de courant dudit premier transistor (TR7), la base du deuxième transistor (TR8) étant couplée avec ledit moyen de couplage capacitif (24).

5. Circuit générateur d'impulsions de commande selon la revendication 3, caractérisé en ce que ledit moyen de commutation comporte un circuit amplificateur différentiel à transistors (TR10, TR11, R20 et R23) connecté de façon à recevoir sur des première et deuxième bornes d'entrée la tension de sortie dudit moyen générateur de tension (R8 et R9) et l'impulsion de retour de balayage fournie via ledit moyen de couplage capacitif (24), et un transistor (TR12) dont le trajet de courant est connecté en série avec ledit moyen résistif de charge (R22) et la base est connectée à la borne de sortie dudit circuit amplificateur différentiel (TR10, TR11, R20 et R23).

6. Circuit générateur d'impulsions de commande selon la revendication 3, caractérisé en ce que ledit moyen de commutation (TR7 à TR9; TR10 à TR12; TR13) est constitué d'un transistor dont la base est connectée à la borne de sortie dudit moyen générateur de tension (R8, R9) et dont le trajet de courant est connecté entre ledit moyen résistif de charge (R31) et ledit moyen de couplage capacitif (24).

7. Récepteur de télévision en couleur caractérisé par un circuit générateur d'impulsions de commande selon l'une quelconque des revendications précédentes.

# FIG. 1

# FIG. 2

1

# FIG. 3

EP 0 107 205 B1

FIG. 4A

FIG. 4B

FIG. 4C

FIG. 4D

FIG. 4E

FIG. 4F

FIG. 4G

FIG. 4H

FIG. 5A

FIG. 5B

FIG. 5C

FIG. 5D

FIG. 5E

# F I G. 6

FROM NAND CIRCUIT 20

GATE PULSE

FLYBACK PULSE

# F I G. 7

FROM NAND CIRCUIT 20

GATE PULSE

FLYBACK PULSE